Europäisches Patentamt

(19) European Patent Office

Office européen des brevets

(11) Publication number : **0 050 544 B2**

# NEW EUROPEAN PATENT SPECIFICATION

(12)

(45) Date of publication of the new patent
specification : **08.07.92 Bulletin 92/28**

(21) Application number : **81401523.6**

(22) Date of filing : **02.10.81**

(51) Int. Cl.$^5$ : **F16B 11/00,** B23Q 1/00

(54) **Method of assembling a machine tool and machine tool.**

(30) Priority : **20.10.80 US 199019**

(43) Date of publication of application :
**28.04.82 Bulletin 82/17**

(45) Publication of the grant of the patent :
**03.12.86 Bulletin 86/49**

(45) Mention of the opposition decision :
**08.07.92 Bulletin 92/28**

(84) Designated Contracting States :
**CH DE FR GB IT LI**

(56) References cited :
**DD-A- 107 869
DD-A- 129 134
DE-A- 1 577 136
DE-A- 2 256 029
DE-A- 2 716 855
DE-A- 2 743 396
DE-B- 1 046 415
DE-C- 943 087
GB-A- 13 659
US-A- 2 974 080**

(56) References cited :
**US-A- 3 534 643
US-A- 3 800 636
US-A- 3 837 245
Leaflet of Hans Worm, Solingen "Einfache
und Doppel-Kugelführungen für begrenzte
Schiebewege mit Lagerböcken" 1977, pp.
33-40
Article "An interesting approach to plastics-
faced slideways" in "Machinery and produc-
tion engineering" 5.10.1977, pp.332-334
"Der Betriebsleiter" 11/79 pp. 10, 12
"Werkstatt und Betrieb" 113/80 p. 421**

(73) Proprietor : **THE WARNER & SWASEY
COMPANY
11000 Cedar Avenue P.O. Box 94531
Cleveland Ohio 44101 (US)**

(72) Inventor : **Erickson, Richard D.
611 Falls Road
Chagrin Falls Ohio 44022 (US)**

(74) Representative : **Smith, Norman Ian et al
F.J. CLEVELAND & COMPANY 40-43 Chancery
Lane
London WC2A 1JQ (GB)**

EP 0 050 544 B2

## Description

The present invention relates to a method of assembly a machine tool and more specifically to a machine tool having a cast bed or base.

Machine tools having rigid metal bases upon which spindles and wayblocks are mounted are well known and may be constructed as shown in US-A-3534643. Although these machine tools have been more or less satisfactory in their operation efforts have been made to reduce the cost of forming the beds or bases of the machine tools. In an effort to reduce the cost of forming the base of a machine tool, it has been suggested that the base be cast from concrete and/or similar materials in the manner disclosed in US-A-353-4643. With both metal and concrete bases, however, there remains the problem of satisfactorily mounting the spindles and wayblocks on the bases.

GB-A-13659 AD 1915, DE-A-1 577136, US-A-2974080 and DE-B-1046415 all disclose the use of mouldable filler substances in conjunction with cast surfaces but these are all concerned with the provision of one finished surface or one type of finished surface. These disclosures are not concerned with, and therefore do not address, the special problem of aligning the spindle axis of a spindle assembly relative to the plane of a wayblock in a machine tool, of the type mentioned above.

The present invention provides a method of assembling a machine tool comprising the following sequential steps:

(a) forming a cast one-piece member having a slant bed portion and a headstock portion with a rough spindle bore formed therethrough;

(b) positioning a wayblock having ways and support means on the slant bed portion at a desired position with respect to the rough spindle bore;

(c) mounting a tailstock assembly on the wayblock;

(d) aligning the tailstock assembly directly with the rough spindle bore by positioning the wayblock;

(e) forming dam means around the support means of the wayblock;

(f) introducing a hardenable filler between the support means of the wayblock and the slant bed portion to permanently position the wayblock;

(g) positioning a spindle assembly having an outer housing and an inner member rotatable with respect to said outer housing, at a desired position in the rough spindle bore of the headstock portion of the cast one-piece member;

(h) aligning the spindle assembly and the wayblock directly one with the other so that the rotatable member and the ways are in a desired relative alignment;

(i) forming dam means between the spindle housing and the headstock portion (16) of the one-piece member;

(j) introducing a hardenable filler between at least a portion of the spindle housing to permanently position the rotatable member and the ways in the desired relative alignment.

It is an advantage of this invention to provide a new and improved method of assembly in which a base is used in a substantially as cast condition with dimensional inaccuracies between a surface of the base connected with a spindle and a surface of the base connected with a wayblock being accommodated by casting a body of material in situ between the wayblock and the base.

Optional features are defined in Claims 2 to 4 An example of the present invention will be described below in connection with the accompanying drawings wherein:

Figure 1 is a front elevational view of a machine tool assembled in accordance with the present invention;

Figure 2 is an end view, taken generally along the line 2-2 of Figure 1, of the machine tool with a chip conveyor assembly removed in order to more clearly illustrate the relationship between a bed or base and a wayblock upon which a turret assembly and tailstock assembly are mounted;

Figure 3 is a front elevational view of the cast base used in the machine tool of Figures 1 and 2;

Figure 4 is an end view, taken generally along the line 4-4 of Figure 3, further illustrating the construction of the base of the machine tool;

Figure 5 is an enlarged fragmentary view illustrating the relationship between the wayblock and a portion of the base of the machine tool of Figures 1 and 2; and

Figure 6 is a fragmentary sectional view illustrating the manner in which a spindle assembly is positioned relative to the base of the machine tool of Figures 1 and 2.

### Machine Tool - General

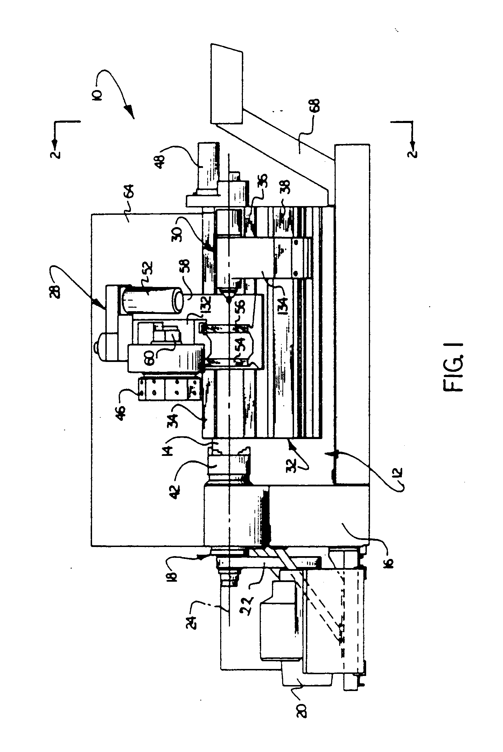

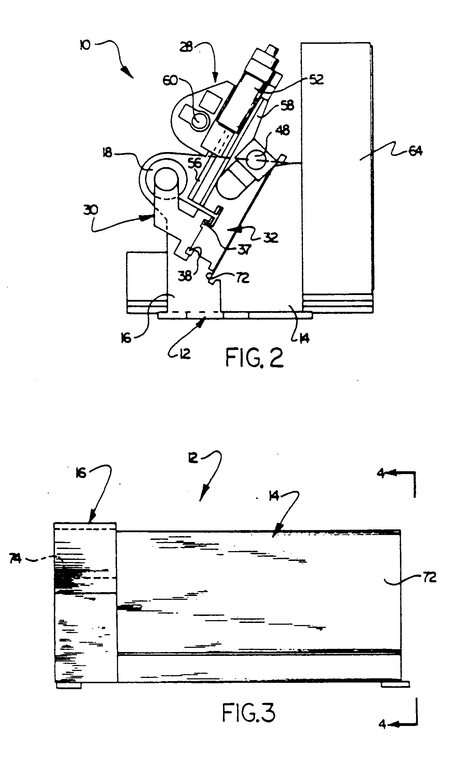

A machine tool 10 (see Figures 1 and 2) assembled in accordance with the present invention has a cast bed or base 12 with a longitudinally extending slant bed section 14 arid a head stock section 16. A spindle assembly 18 is mounted on the head stock section 16. The spindle assembly 18 is driven by a motor 20 (Figure 1) through a drive belt 22 to rotate a workpiece (not shown) about a central axis 24 of the spindle assembly.

A turret assembly 28 and a tailstock assembly 30 are movably mounted on a wayblock 32. The wayblock 32 is connected to the slant bed section 14 of the base 12. The wayblock 32 is provided with ways or tracks 34, 36, 37 and 38 (Figures 1 and 5). The ways 34, 36, 37 and 38 extend parallel to the axis 24 (Figure 1) and guide movement of the turret assembly 28 and tailstock assembly 30 relative to the spindle assembly 18.

The spindle assembly 18 has a chuck or jaws 42 which grip a workpiece and rotate it relative to the base 12 about the axis 24. Chuck 42 is secured to one end of a rotatable member 124 (Figure 6) which is disposed in and extends thru sleeve or housing 118. The other end of member 124 is driven by a belt drive from motor 20. As the workpiece is being rotated by the spindle assembly 18, suitable tools mounted on a rotatable positionable turret 46 are effective to cut metal from the workpiece During metal cutting the tool turret 46 is held against rotating in a desired position.

A turret Z-axis servo drive motor 48 moves the turret assembly 28 along the Z-axis toward and away from the head stock section 16 of the base 12. In addition, an X-axis servo drive motor 52 is operable to move the turret 46 along the X-axis toward and away from the central axis 24 along ways 54 and 56 on a carriage 58. Servo drive motors 48 and 52 may be operated simultaneous at various speeds and selected directions to provide full two axis movement of turret 46. An indexing motor 60 is operable to rotate the turret 46, to selected angular positions, about an axis extending parallel to the central axis 24 of the spindle assembly 18 to position various tools mounted on the turret relative to a workpiece.

Suitable electrical controls are provided in a control cabinet 64 (see Figures 1 and 2) to control the operation of the machine tool 10. During operation of the machine tool 10, the tools mounted on the turret 46 are effective to cut metal from a workpiece as it is being rotated by the spindle assembly 18. A chip conveyor assembly 68 is provided to conduct chips away from the cutting area of the machine tool. The chip conveyor 68 has been removed from the machine tool 10 in Figure 2 in order to more clearly illustrate the relationship between the base 12, wayblock 32, turret assembly 28 and tailstock assembly 30.

Base Construction

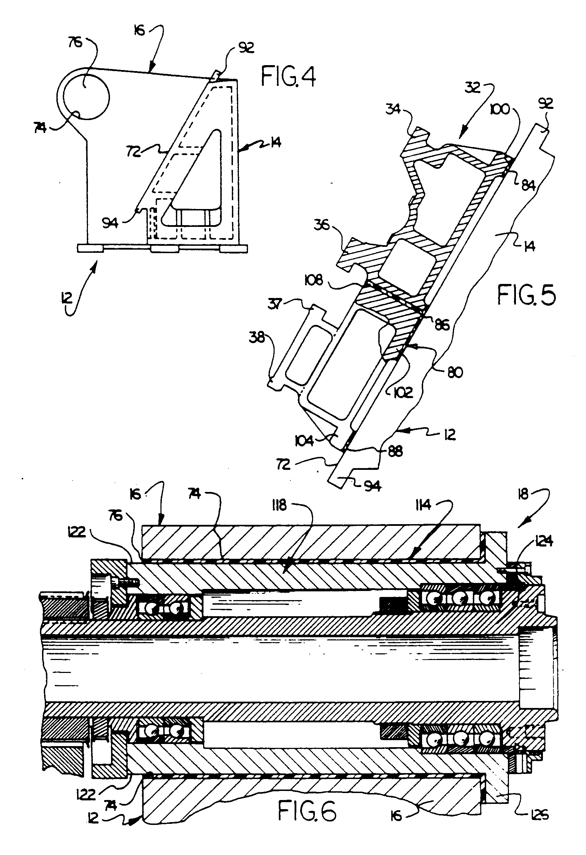

The machine tool base 12 is cast as one piece. Thus, the longitudinally extending slant bed or main section 14 and head section 16 (see Figures 3 and 4) are cast in a single mold cavity. As the base 12 is cast, a flat sloping side surface area 72 is formed on the longitudinally extending main section 14 of the base to support the wayblock 32 (see Figure 2). In addition, a cylindrical surface 74 is formed in an opening 76 (see Figure 4) extending through the head section 16. The opening 76 receives the spindle assembly 18 and has a central axis which is generally coincident with the axis 24. However, due to casting tolerances, the axis of the rough cast spindle bore 76 axis may be slightly skewed relative to the surface area 72 and axis 24.

Although the base or bed 12 of a presently preferred embodiment of the machine tool 10 is formed of cast iron, it is contemplated that the base 12 could be formed of other materials. Specifically, it is contemplated that it may be desirable to use an epoxy concrete to form the base 12. A cast epoxy concrete base would have substantially better internal vibration damping characteristics than would a cast iron base. Of course, the base 12 could be cast from other materials if desired.

In order to minimize costs, the base 12 is used in an as cast condition with a minimum of machining. To this end, very little or no flat surface machining is done on the base 12. The primary or only machining to be done on the base 12 consists of the drilling and tapping of holes in the base 12.

Due to the tolerance required by production casting operations, the as cast position of the wayblock mounting surface 72 will vary within a tolerance range relative to the spindle assembly mounting surface 74. Of course, the larger the base 12, the larger will be the extent of possible variation in the spatial orientations of the as cast surfaces 72 and 74.

For example, it is contemplated that the base 12 could be formed of cast iron with an overall length of approximately 8 feet (about 2.4 m) and an overall height of approximately 4 feet (about 1.2 m). The dimensional accuracy with which the surface 72 of a base of this size can be located will probably vary from nominal dimensions by a tolerance range of approximately one-fourth of an inch (about 6 mm). Since the spindle assembly mounting surface 74 is formed by a cylindrical core, it is believed that the spindle mounting surface will be more accurately cast than the wayblock support surface 72 and will vary from a nominal diameter by a tolerance range which is less than one-fourth of an inch (about 6 mm). The foregoing materials, dimensions and tolerance ranges are given only for purposes of illustration and not for purposes of limitation of the invention.

Wayblock Mounting

There is a substantial tolerance range for the as cast orientation of the wayblock mounting surface 72 relative to the as cast spindle assembly mounting surface 74. However, it is necessary that the wayblock 32 be accurately located relative to the spindle assembly 18 because tools mounted on the turret 46 must be precisely positioned relative to a workpiece being rotated by the spindle assembly 18. In addition, the tailstock assembly 30 must be accurately aligned with the longitudinal central axis 24 of the spindle assembly 18. In order to provide for precise positioning of the wayblock 32 relative to the spindle assembly 18, a body 80 (see Figure 5) of hardenable material is cast in situ between the wayblock 32 and the mounting surface 72. Before the body 80 of hardenable material is cast, the wayblock 32 is positioned relative to the spindle mounting surface 74 (Figure 4) by suitable fixtures (not shown). The body of material 80 is then cast between the wayblock 32 and the surface 72. In the illustrated embodiment of the invention, the cast in situ body of material 80 is formed as three longitudinally extending strips 84, 86 and 88 which are located beneath corresponding projections on the wayblock 32 and extend parallel to the ways 34, 36, 37 and 38 (Figure 5). However, it is contemplated that the body of hardenable material 80 could be cast as one-piece

When the base 12 and wayblock 32 are to be interconnected, the wayblock is supported in a spaced apart relationship with the base by a suitable jig or fixture. Although other known fixturing arrangements could be used, clamps which engage longitudinally extending lips or edges 92 and 94 (see Figure 5) on the main section 14 of the base are used to support the wayblock 32. Jack screws connected with the clamp are adjustable to move the wayblock 32 toward and away from the mounting surface 72 on the base 12 and to move the wayblock sideways along the mounting surface 72.

After the wayblock 32 has been initially positioned relative to the base 12 by the clamps, the tailstock assembly 30 is mounted on the way 38. A rod is mounted in the tailstock assembly 30. A pair of circular discs are mounted on the outer end of the rod in a coaxial relationship with the rod. The circular discs have equal diameters which are slightly smaller than the diameter of the opening 76. The discs are axially spaced apart by a distance which is slightly smaller than the axial extent of the opening 76.

The coaxial discs are positioned in the cylindrical opening 76. By adjusting the jack screws on the clamps connected with the wayblock 32, the position of the wayblock can be adjusted until relatively small spaces between the discs and the surface 74 are present throughout their circumferential extent. At this time, the wayblock 32 is located in a position in which the ways 34, 36, 37 and 38 extend parallel to the spindle axis 24 and in which the center of the head of the tailstock assembly 30 is aligned with the axis 24. However the ways 34, 36, 37 and 38 may be slightly skewed relative to the central axis of the opening 76.

Once the wayblock 32 has been located so that the ways 34, 36, 37 and 38 are closely aligned with the desired spindle axis 24 which extends thru opening 76, dams are formed around inwardly extending support ribs or pads 100, 102 and 104 which project from the lower or inner side of the wayblock 32. The longitudinally extending dams can be formed of a suitable adhesive backed foam or rubber stripping. The edges of the dams extend parallel to the ways 34, 36, 37 and 38. The lower edges are backed with an epoxy tape. The rubber foam or stripping which forms the dams can also be applied to the wayblock 32 before it is positioned on the base 12. Before the dams are finally set in place, the ways are columnated or laser checked for flatness and surface parallelism.

Once the dams have been formed, the spaces between the longitudinally extending ribs or mounting pads 100, 102 and 104 on the bottom of the wayblock 32 and the sloping side surface 72 of the base 12 are filled with a hardenable material. As the material hardens, it fixedly bonds the wayblock to the base 12. In addition, as the material hardens, it forms a solid cast body which maintains the spatial orientation of the wayblock 32 constant relative to the base 12 and spindle mounting surface 74.

To provide a secure bonding action, the hardenable material which is pumped into the spaces between the wayblock mounting pads 100, 102 and 104 and the side surface 72 of the base 12 contains an epoxy resin or grout. Although many different types of hardenable polymeric materials could be used to form the strips 84, 86 and 88, in one specific instance the hardenable epoxy resin or grout sold under the trademark Sikadur and manufactured by Sika Chemical Corporation of Lyndhurst, New Jersey, U.S.A. was used. Since the space between the wayblock pads 100, 102 and 104 and the side surface 72 of the base 12 may be relatively large, a granite filler material is provided in the epoxy resin.

The epoxy resin is pumped directly into an upper side of the space between the upper pad 100 and the side surface 72 of the base 12 to form the strip 84. The epoxy resin is pumped through a passage 108 formed in the wayblock 32 to the space between the wayblock pad 102 and the side surface 72 of the base 12 to form the strip 86. The lower strip 88 is formed by flowing the hardenable epoxy from the space where the strip 86 is formed downwardly through channels to the space between the pad 104 and the outer side surface 72 of the wayblock. Suitable vents are provided in the wayblock to enable air to escape from between the pads 100, 102 and 104 and the surface 72 as the hardenable epoxy resin material is pumped into the space between the pads and the base 12.

Once the hardenable epoxy resin material in the strips 84, 86 and 88 has dried or set, the clamps are removed from the wayblock 32 and base 12. The wayblock 32 is then permanently held in position relative to the spindle mounting surface 74 by the body 80 of hardenable epoxy resin material. In addition, the wayblock is fixedly secured to the base 12 by the body 80 of hardenable material.

The body 80 of hardenable epoxy resin material is shaped by the wayblock 32 and base 12 to compensate for any irregularities in the as cast surface 72 of the base 12. Therefore it is not necessary to machine the base surface 72 before the wayblock 32 is mounted. This eliminates expensive machining operations on the base 12.

Although it is preferred to use only the body 80 of hardenable epoxy resin or other suitable polymeric material to connect the wayblock 32 with the base 12, it is contemplated that a supplementary holding action could be provided if desired. This holding action could be obtained by the use of bolts between the wayblock 32 and the main section 14 of the base along with the epoxy resin. The bolts would extend through holes in the wayblock 32 into threaded openings in the base 12. The threaded openings could be formed by drilling and tapping the base 12 when it is formed of cast iron or a similar material or by positioning inserts in the main section 14 of the base when the base is formed of a cast concrete or similar material.

Thickness of the Cast Body of Material

The thickness of the body 80 of cast material will vary as a function of variations in the spatial orientation of the wayblock mounting surface 72 relative to the spindle assembly mounting surface 74 and as a function of variations in the dimensions of the wayblock 32. It is contemplated that the position of the as cast side surface area 72 of the main section 14 of the base 12 will vary from a nominal or design position within a relatively large tolerance range. The position, orientation, and dimensions of the as cast spindle mounting surface 74 will vary within a somewhat smaller tolerance range. This is because the side surface 74 is formed by a core which can be relatively accurately located in the mold in which the base 12 is cast.

The tolerance range between the upper or outer side surfaces of the ways 34, 36, 37 and 38 and the side surfaces of the pads 100, 102 and 104 which face toward the base 14 will be smaller than the tolerance ranges for the mounting surfaces 72 and 74 on the base 12. This is because the ways 34, 36, 37 and 38 are accurately machined. The bottom surfaces of the pads 100, 102 and 104 are also machined to provide support surfaces for machining the ways. However, it is contemplated that a fixture may be used to level the wayblock 32 during machining of the ways 34, 36, 37 and 38. If this is done, the lower side surface of the wayblock 32 could be used in an as cast condition.

The body 80 of cast material must have a minimum thickness which enables it to compensate for the tolerance ranges for the as cast surfaces 72 and 74 on the base 12 and the tolerance range between the upper and lower sides of the wayblock 32. The tolerance range for the body 80 of material is equal to the sum of the tolerance ranges for the distance between the as cast surfaces 72 and 74 of the base 12 and the maximum tolerance range allowed for thickness of the wayblock 32. The body 80 of hardenable material can compensate for the combined tolerance ranges since the wayblock 32 is positioned relative to the base 12 by clamps and jack screws before the body 80 is cast in place between the wayblock 32 and base 12.

The body 80 of hardenable material has a minimum thickness when the wayblock 32 has a maximum thickness and the tolerances for the as cast surfaces 72 and 74 minimize the distance between these surfaces. This minimum thickness of the body 80 of hardenable material is sufficient to maintain the wayblock 32 spaced apart from the base 12 and to enable the body 80 of material to at least partially absorb vibrations transmitted to the wayblock 32 during operation of the machine 10.

It is contemplated that the specifc tolerance ranges used for the base 12 and wayblock 32 will vary. Therefore, the specifc tolerance range for the cast body 80 of material will vary. However, the thickness of the cast body 80 of material will exceed a minimum thickness by a tolerance range having an extent which is equal to the sum of the extents of the tolerance range for the thickness of the wayblock 32 and the tolerance range for the distance between the wayblock mounting surface 72 and the spindle mounting surface 74.

For example, assume that the dimension between the center of the opening 76 and the wayblock mounting surface 72 could vary within a tolerance range of plus or minus one-eighth of an inch (about 3 mm). Also assume that the radius of the opening 76 could vary within a tolerance range of plus or minus one-sixteenth of an inch (about 1.5 mm). Then, the distance between the mounting surfaces 72 and 74 could vary by as much as three-sixteenths of an inch (about 4.5 mm).

Further assume that the thickness of the wayblock 32 may vary by plus or minus one thirty-second of an inch (about 0.8 mm). Based on these assumptions the total tolerance range for the thickness of the body 80 of material would be seven-sixteenths of an inch (about 11 mm). The total tolerance range of seven-sixteenths of an inch (about 11 mm) is in addition to a minimum thickness of the body 80. This minimum thickness may be about five-sixteenths of an inch (about 8 mm). Of course, a machine tool 10 could be designed with tolerance ranges other than the illustrative tolerance ranges which have been assumed in the foregoing example. Therefore, the invention is not to be limited to the specific tolerance range and minimum thickness set forth in the example for the body 80.

Spindle Mounting

After the wayblock 32 has been mounted on the base 12, the spindle assembly 18 is connected with the spindle mounting surface 74 with the spindle axis 24 parallel to the ways 34, 36, 37 and 38. To accommodate variations in the positioning of the wayblock 32 relative to the spindle mounting surface 74, the spindle assembly 18 is connected with and positioned relative to the base 12 by a body 114 (see Figure 6) of hardenable material. The body 114 of hardenable material is cast in situ between the spindle assembly 18 and the mounting surface 74.

In order to mount the spindle assembly 18 on the base 12, a cylindrical spindle sleeve or housing 118 is positioned in the cylindrical opening 76 (see Figure 4) in the head section 16 of the base 12. The spindle housing 118 is then accurately positioned relative to the ways 34, 36, 37 and 38 on the wayblock 32. At this time the spindle axis 24 is exactly parallel to the ways 34, 36, 37 and 38 and may be slightly skewed relative to the central axis of the opening 76. This skewed relationship is compensated for by the body 114 of hardenable material. Thus, although the body 114 has a generally cylindrical configuration, it may not be exactly cylindrical.

Once the spindle housing 118 has been positioned, dams are formed between the spindle housing 118 and the head section 16 of the base 12. A hardenable polymeric material is then pumped into the space between the base 12 and the spindle housing 118. The body, 114 of hardenable material is shaped by the cylindrical base surface 74 which is in as cast condition and the cylindrical outer side surface 122 of the housing 118. Since the spindle mounting surface 74 is in an as cast condition, machining operations on the base 12 are further minimized.

Once the body 114 has solidified, in performs the dual functions of fixedly connecting the spindle housing 118 with the base 12 and of positioning the spindle housing 118 relative to the base. Although it is preferred to use the body 114 of hardenable material as the only means of connecting the spindle housing 118 with the base 12, it is contemplated that bolts could be provided between an annular flange 126 on the spindle housing 118 and the head section 16 of the base 12 to provide a further holding action.

To provide a satisfactory bonding action, the body 114 of material is formed of a hardenable polymeric material, preferably an epoxy resin. Although many different types of epoxy resin grouts could be used if desired, one suitable epoxy resin grout is sold by Diamant-Kitte-Schulz Gmbh & Co. of Rheydt, Germany under the trade name Moglice. Of course, other hardenable polymeric materials could be used to form the body 114 of material between the spindle housing 118 and base 12 if desired.

It is contemplated that the space between the spindle housing 118 and head section 16 of the base 12 will be substantially smaller than the space between the pads 100, 102 and 104 on the wayblock 32 and the side surface 72 of the base 12. Therefore, the epoxy resin material which is molded between the spindle housing 118 and base 12 does not need to contain a filler material.

Machine Tool-Operation

During operation of the machine tool 10, the bodies 80 and 114 dampen vibrations which occur as metal is removed from a workpiece. This is because forces resulting from operation of the machine tool are transmitted to the base 12 through the bodies 80 and 114 of polymeric material. The vibration dampening characteristics of the bodies 80 and 114 of polymeric material are superior to vibration dampening characteristics of the cast iron base 112.

During operation of the machine tool 10, tools held by the rotatable turret 46 engage a workpiece which is rotated by chuck 42 attached to rotatable member 124 of the spindle 18. As the tools mounted on the turret 46 cut metal away from the workpiece, vibrations are transmitted from the turret 46 through a cross slide 132 and carriage 58 (see Figure 1) to the wayblock 32. In addition, vibrations are transmitted to the wayblock 32 from a tailstock carriage 134.

The body 80 of polymeric material which is cast in situ between the wayblock 32 and the base 12 substantially reduces the extent to which vibrations are transmitted from the turret assembly 28 and tailstock assembly 30 to the base 12. This is because the polymeric material 80 has relatively good vibration dampening characteristics. Therefore, the vibrations which are necessarily generated during the cutting away of metal from the workpiece tend to be isolated in the turret assembly 28, tailstock 30 and wayblock 32 and are not transmitted to the base 12 where they can effect other operating components of the machine tool 10. Isolating of the vibrations which are transmitted to the wayblock 32 improves the operating characteristics of the machine tool 10 and the accuracy with which a workpiece can be machined.

During operation of the machine tool 10, vibrations are transmitted from the workpiece to the spindle assembly 18. The cylindrical body 114 of polymeric material between the spindle assembly 18 and the mounting surface 74 reduces the extent to which vibrations are transmitted from the spindle assembly to the base 12. Of course, reducing the extent to which vibrations are transmitted from the spindle assembly 18 to the base 12 during operation of the machine tool tends to enhance the operating characteristics of the machine tool for the same reasons previously explained in connection with the body 80 of polymeric material. Thus, during operation of the machine tool 10, operating forces generated by the cutting of metal are transmitted to and attenuated by the bodies 80 and 114 of polymeric material.

In view of the foregoing it is apparent that the present arrangement relates to a new and improved machine tool 10 assembly method having a cast bed or base 12 which is used in a substantially as cast condition, that is with little or no machining. The as cast base 12 has relatively large dimensional tolerance ranges. Therefore, a wayblock 32 is positioned relative to the base 12 by locating the wayblock with suitable fixtures. A body 80 of a suitable polymeric material, preferably an epoxy resin material, is then cast in situ in the space between the wayblock 32 and an as cast side surface 72 of the base 12. Similarly, a spindle assembly 18 is positioned relative to the base 12 and a second body 114 of a suitable polymeric material, preferably an epoxy resin material, is cast in situ between the spindle assembly and an as cast surface of the base.

A turret assembly 28 which holds tools and a tailstock assembly 30 which supports a workpiece are advantageously mounted on the wayblock 32. Therefore, during operation of the machine tool, operating forces are transmitted from the turret assembly 28 and the tailstock 30 to the base 12 of the machine tool 10 through the body 80 of material which is cast between the wayblock 32 and the base 12. Similarly, operating forces applied to the spindle assembly 18 are transferred to the base 12 through the body 114 of material which is cast between the spindle assembly and the base. By transmitting operating forces through the two cast bodies of polymeric material, vibrations tend to be dampened.

**Claims**

1. A method of assembly a machine tool (10) comprising the following sequential steps:

(a) forming a cast one-piece member (12) having a slant bed portion (14) and a headstock portion (16) with a rough spindle bore (74) formed therethrough;

(b) positioning a wayblock (32) having ways (34, 36, 37, 38) and support means (100, 102, 104) on the slant bed portion (14) at a desired position with respect to the rough spindle bore (74);

(c) mounting a tailstock assembly (30) on the wayblock (32);

(d) aligning the tailstock assembly (30) directly with the rough spindle bore (76) by positioning the wayblock (32);

(e) forming dam means around the support means (100, 102, 104) of the wayblock (32);

(f) introducing a hardenable filler (80) between the support means (100, 102, 104) of the wayblock (32) and the slant bed portion (14) to permanently position the wayblock (3);

(g) positioning a spindle assembly (18) having an outer housing (118) and an inner member (124) rotatable with respect to said outer housing (118), at a desired position in the rough spindle bore (74) of the headstock portion (16) of the cast one-piece member (12);

(h) aligning the spindle assembly (18) and the wayblock (32) directly one with the other so that the rotatable member (124) and the ways (34, 36, 37, 38) are in a desired relative alignment;

(i) forming dam means between the spindle housing (118) and the headstock portion (16) of the one-piece member (12);

(j) introducing a hardenable filler (114) between at least a portion of the spindle housing to permanently position the rotatable member (124) and the ways (34, 36, 37, 38) in the desired relative alignment.

2. A method according to claim 1 wherein said hardenable filler (114, 80) comprises a bonding material to secure the rotatable member (124) and the ways (34, 36, 37, 38) in the desired relative alignment.

3. A method according to any one of claims 1 or 2 wherein said hardenable filler (114, 80) is a polymeric material.

4. A method according to any one of claims 1 to 3 wherein said hardenable filler (114, 80) is an epoxy resin.

**Patentansprüche**

1. Verfahren zum Zusammenbauen einer Werkzeugmaschine(10), mit der Folge der Schritte:

a) Formen eines gegossenen einstückigen Teiles (12), das einen geneigten Bettabschnitt (14) und einen Spindelkastenabschnitt (16) mit einer durch ihn führenden groben Spindelbohrung (74) hat;

b) Anordnen eines Führungsbahnblockes (32), der Führungsbahnen (34, 36, 37, 38) und Stützmittel (100, 102, 104) hat, in einer gewünschten Lage relativ zu der groben Spindelbohrung (74) auf dem geneigten Bahnabschnitt (14);

c) Montieren einer Reitstockanordnung (30) auf dem Führungsbahnblock (32);

d) Ausrichten der Reitstockanordnung (30) direkt auf die rohe Spindelbohrung (74) durch Positionieren des Führungsbahnblockes (32);

e) Ausbilden von Abdichtungen um die Stützmittel (100, 102, 104) des Führungsbahnblockes (32);

f) Einführen eines aushärtbaren Füllstoffes (80) zwischen die Stützmittel (100, 102, 104) des Führungsbahnblockes (32) und den geneigten Bettabschnitt (14) zum dauerhaften Positionieren des Führungsbahnblockes (32);

g) Anordnen einer Spindeleinheit (18), die ein äußeres Gehäuse (118) und ein bezüglich des äußeren Gehäuses drehbares inneres Teil (124) hat, in einer gewünschten Lage in der groben Spindelbohrung (74) des Spindelkastenabschnitts (16) des gegossenen einstückigen Teiles (12);

h) direktes Ausrichten der Spindeleinheit (18) und des Führungsbahnblockes (32) zueinander, so daß das drehbare Teil (124) und die Führungsbahnen (34, 36, 37, 38) in einer gewünschten relativen Ausrichtung sind;

i) Ausbilden von Abdichtungen zwischen dem Spindelgehäuse (118) und dem Spindelkastenabschnitt (16) des einstückigen Teiles (12);

j) Einführen eines aushärtbaren Füllstoffes (114) zwischen mindestens einen Teil des Spindelgehäuses und die Führungsbahnen (34, 36, 37, 38) zum dauerhaften Positionieren des drehbaren Teils (124) in der gewünschten relativen Ausrichtung.

2. Verfahren nach Anspruch 1, wobei der aushärtbare Füllstoff (114, 80) einen Klebstoff aufweist, um das drehbare Teil (124) und die Führungsbahnen (34, 36, 37, 38) in der gewünschten relativen Ausrichtung festzulegen.

3. Verfahren nach einem der Ansprüche 1 oder 2, wobei der aushärtbare Füllstoff (114, 80) ein polymeres Material ist.

4. Verfahren nach einem der Ansprüche 1 bis 3, wobei der aushärtbare Füllstoff (114, 80) ein Epoxydharz ist.

## Revendications

1. Procédé d'assemblage d'une machine-outil (10) comprenant les étapes successives suivantes :

(a) former une pièce monobloc coulée (12) possédant une partie en banc incliné (14) et une partie à poupée (16) traversée par un alésage de broche grossier (74) ;

(b) mettre en place un bloc de guidage (32), possédant des glissières de guidage (34, 36, 37, 38) et des moyens (100, 102, 104) formant support sur la partie en banc incliné (14), à une position désirée par rapport à l'alésage de broche grossier (74) ;

(c) monter un ensemble à contrepoupée (30) sur le bloc de guidage (32) ;

(d) aligner l'ensemble à contrepoupée (30) directement avec l'alésage de broche grossier (76) en mettant en place le bloc de guidage (32) ;

(e) former des moyens de retenue autour des moyens formant support (100, 102, 104) du bloc de guidage (32) ;

(f) introduire un matériau de remplissage durcissable (80) entre les moyens formant support (100, 102, 104) du bloc de guidage (32) et la partie en banc incliné (14) pour mettre en place définitivement le bloc de guidage (32) ;

(g) mettre en place un ensemble à broche (18), possédant un logement extérieur (118) et un élément intérieur (124) mobile en rotation par rapport au logement extérieur (118), à une position désirée dans l'alésage de broche grossier (74) de la partie à poupée (16) de la pièce monobloc coulée (12) ;

(h) aligner l'ensemble à broche (18) et le bloc de guidage (32) directement l'un avec l'autre de façon que l'élément mobile en rotation (124) et les glissières de guidage (34, 36, 37, 38) soient dans un alignement relatif désiré ;

(i) former des moyens de retenue entre le logement de broche (118) et la partie à poupée (16) de la pièce monobloc (12) ;

(j) introduire un matériau de remplissage durcissable (114) entre au moins une partie du logement de broche et la partie à poupée (16) de la pièce monobloc (12) pour mettre en place définitivement l'élément mobile en rotation (124) et les glissières de guidage (34, 36, 37, 38) dans l'alignement relatif désiré.

2. Procédé selon la revendication 1, dans lequel ledit matériau de remplissage durcissable (114, 80) comprend un liant pour maintenir l'élément mobile en rotation (124) et les glissières de guidage (34, 36, 37, 38) dans l'alignement relatif désiré.

3. Procédé selon l'une quelconque des revendications 1 ou 2, dans lequel ledit matériau de remplissage durcissable (114, 80) est un matériau polymère.

4. Procédé selon l'une quelconque des revendications 1 à 3, dans lequel ledit matériau de remplissage durcissable (114, 80) est une résine époxy.

FIG. 1

FIG. 2

FIG.3

FIG.4

FIG.5

FIG.6